# FASCICULE DE BREVET EUROPEEN

(11) **EP 1 042 654 B1**
(45) Date de publication et mention de la délivrance du brevet: **29.05.2002**
(21) Numéro de dépôt: 98964555.1
(22) Date de dépôt: 30.12.1998
(51) Int. Cl.: G01J 3/50, G01N 21/89, B07C 5/342

(54) **DISPOSITIF D'ANALYSE COLORIMETRIQUE D'OBJETS TELS QUE DES FRUITS OU LEGUMES**
VORRICHTUNG ZUR KOLORIMETRISCHEN ANALYSE VON GEGENSTÄNDEN WIE FRÜCHTEN ODER GEMÜSE
DEVICE FOR COLOURIMETRIC TEST OF OBJECTS SUCH AS FRUITS OR VEGETABLES

(30) Priorité: 30.12.1997 FR 9716667
(43) Date de publication de la demande: 11.10.2000
(73) Titulaire: Compucal, 82200 Moissac (FR)
(72) Inventeur: DELCASSE, Jean-Luc, F-31520 Toulouse (FR); DESCHASTRES, Patrick, F-31500 Toulouse (FR)
(74) Mandataire: Le Forestier, Eric
(86) Numéro de dépôt international: FR9802919
(87) Numéro de publication internationale: WO9935473

(56) Documents cités:
- EP-A- 0 554 954
- EP-A- 0 560 565
- EP-A- 0 566 397
- WO-A-92/08322
- WO-A-96/23207
- WO-A-97/04418
- US-A- 4 225 242
- US-A- 5 164 795
- PATENT ABSTRACTS OF JAPAN vol. 012, no. 032 (P-661), 30 janvier 1988 & JP 62 184583 A (KUBOTA LTD), 12 août 1987

## Description

La présente invention concerne d'une façon générale les dispositifs pour l'analyse visuelle qualitative d'objets défilant sur un convoyeur, notamment à des fins de tri.

L'invention s'applique principalement au tri de fruits et légumes de formes généralement sphériques ou ovoïdes.

Il existe à l'heure actuelle un certain nombre de dispositifs d'analyse qualitative de fruits ou légumes.

Un dispositif de base consiste à utiliser une caméra en combinaison avec un calculateur d'analyse d'image, de manière à pouvoir éliminer des fruits qui ne satisfont pas à certains critères de qualité ou d'aspect, ou encore d'aiguiller les fruits dans différentes catégories en fonction de certains paramètres des fruits déduits par le calculateur à partir des images.

Une telle caméra peut être construite autour d'un dispositif à couplage de charges ou « capteur CCD » en couleurs, dans lequel le spectre est décomposé en trois bandes larges couvrant l'ensemble du spectre visible et correspondant aux couleurs rouge, vert et bleu (système RVB classique), le calculateur analysant les images restituées par le capteur dans chacune des couleurs.

Ce premier dispositif connu présente toutefois de nombreux inconvénients. Tout d'abord, la résolution des capteurs CCD du commerce à prix abordable est faible. Ensuite, l'analyse colorimétrique pouvant être effectuée à partir de la sortie d'un capteur RVB (ou encore jaune-magenta-cyan du commerce est insuffisamment précise pour détecter des nuances dans les couleurs des fruits ou légumes observés.

Au surplus, un tel dispositif connu, de par sa faible résolution et sa faible sensibilité colorimétrique, est généralement incapable de détecter de façon fiable des défauts tels que des cavités, et en particulier est incapable de différencier une cavité d'une simple tâche à la surface du fruit.

On connaît également des dispositifs d'analyse basés sur un capteur CCD monochrome travaillant dans le domaine infrarouge. Leur efficacité reste toutefois limitée au cas de fruits ou légumes de couleur sombre, et en particulier rouge sombre.

On sait aussi combiner un capteur RVB classique opérant dans le visible avec un capteur monochrome opérant dans l'infrarouge. Ce dispositif conserve toutefois les inconvénients d'une résolution faible et d'une sensibilité chromatique limitée.

On citera en outre les dispositifs d'analyse à diodes électroluminescentes, qui éclairent le fruit avec des composantes chromatiques données et analysent les caractéristiques de réflectance du fruit. Ils sont toutefois dotés d'une résolution quasi-nulle (typiquement quatre zones différentes par fruit) et sont aptes à mesurer seulement la couleur moyenne d'une partie du fruit. On comprend qu'ils sont incapables de détecter des défauts sur les fruits.

On peut également citer les dispositifs divulgués par le document W0 97/04418 et WO 96/23207. Mais de tels dispositifs ne permettent pas de multiplier de manière satisfaisante les composantes chromatiques d'une même image, ce qui est nécessaire pour discriminer de manière fine les objets de couleurs voisines entre eux.

Enfin l'on connaît des dispositif à laser, utilisés principalement en mesure dimensionnelle, qui sont coûteux et dont la mécanique est complexe et fragile. L'analyse chromatique qu'ils peuvent effectuer est par ailleurs extrêmement limitée, du fait de l'utilisation de lumière monochromatique.

La présente invention vise à pallier ces inconvénients et limitations de l'état de la technique, et à proposer un dispositif d'analyse chromatique d'objets tels que des fruits, légumes et analogues qui soit simple et relativement peu coûteux, tout en pouvant présenter un pouvoir de discrimination extrêmement élevé entre des objets de couleurs voisines.

Un autre objet de la présente invention est de proposer un dispositif d'analyse qui puisse détecter d'une façon extrêmement efficace des défauts dans des fruits.

Ainsi la présente invention propose un dispositif pour l'analyse notamment colorimétrique d'un objet tel qu'un fruit, un légume ou analogue, comprenant une caméra de prise d'images et des moyens de traitement pour analyser les images délivrées par la caméra, la caméra comprenant des moyens de capteur matriciel délivrant au moins deux signaux d'images correspondant respectivement à au moins deux bandes étroites non superposées du spectre visible, caractérisé en ce que les moyens de capteur matriciel comprennent un capteur à couplage de charges apte à délivrer en tant que tel trois signaux d'images correspondant à trois bandes larges couvrant ensemble au moins le spectre visible, et un filtre passe-bande à bandes étroites interposé entre l'objet et le capteur.
- un moyen de capteur matriciel délivre en outre un signal d'image correspondant à une bande située dans l'infrarouge.
- les moyens du capteur matriciel délivre au moins trois signaux d'images correspondant à au moins trois bandes étroites non superposées du spectre visible.
- les moyens de capteur matriciel couvre au moins quatre bandes étroites non superposées du spectre visible.
- le dispositif comprend un premier capteur à couplage de charges apte à délivrer des signaux d'image correspondant à trois bandes larges couvrant ensemble au moins le spectre visible, un premier filtre passe-bande à bandes étroites interposé entre l'objet et le capteur, un second capteur à couplage de charges apte à délivrer des signaux d'image correspondant à au moins deux bandes larges couvrant ensemble au moins une partie du spectre visible et une partie du spectre infrarouge, un second filtre passe-bande à bandes étroites interposé entre l'objet et le capteur, et un miroir semi-réfléchissant apte à répartir le rayonnement issu de l'objet entre les premier et second capteurs.
- les deux capteurs sont identiques et sont aptes à délivrer des signaux d'image correspondant à trois bandes larges couvrant respectivement pour la première le bleu, pour la seconde le vert et pour la troisième le rouge ainsi qu'une partie de l'infrarouge.
- le premier filtre possède des bandes passantes centrées respectivement autour d'environ 435 à 470 nm, d'environ 530 à 585 nm et d'environ 655 à 685 nm.
- le second filtre possède deux bandes passantes centrées respectivement autour d'environ 530 à 585 nm et d'environ 735 à 785 nm.
- la seconde bande du premier filtre et la première bande du second filtre sont centrées à environ 530 à 555 nm et à environ 555 à 585 nm, ou inversement.
- le dispositif comprend deux capteurs matriciels et leurs optiques respectives, agencés de manière à réaliser une observation stéréoscopique des objets.
- les deux caméras présentent des axes de visée sensiblement inclinés l'un par rapport à l'autre et des moyens de correction de parallaxe.
- les plans sensibles des capteurs de chaque caméra qui reçoivent la lumière ayant traversé le miroir respectif sont coplanaires, et de préférence horizontaux.
- les optiques des deux caméras ont des axes parallèles l'un à l'autre, et de préférence verticaux, et sont latéralement décalés par rapport aux axes centraux desdits plans sensibles.
- les plans sensibles des capteurs de chaque caméra qui reçoivent la lumière réfléchie et transmise, respectivement, par le miroir associé, sont disposés symétriquement, par rapport audit miroir.
- les angles des miroirs respectifs des deux caméras, par rapport aux axes de visée desdites deux caméras, sont calculé en fonction du décalage latéral des optiques des caméras par rapport aux axes centraux des plans sensibles.

Selon un autre aspect, l'invention propose une installation de tri colorimétrique d'objets tels que des fruits, légumes ou analogues, caractérisée en ce qu'elle comprend un dispositif tel que défini ci-dessus et un dispositif pour convoyer linéairement des objets singularisés disposés en file tout en leur imprimant un mouvement de rotation, caractérisée en ce qu'elle comprend des moyens pour ajuster la vitesse de rotation des objets en fonction d'une taille moyenne des objets défilant dans le champ de la caméra.

De façon préférée, si le dispositif de convoyage comprend des moyens pour faire tourner les objets sur eux mêmes à mesure qu'ils se déplacent linéairement, et si le champ d'observation de la caméra est tel qu'un nombre N d'objets soient visibles simultanément par la caméra, alors ladite vitesse linéaire de déplacement est choisie de telle sorte que chaque objet tourne sur lui-même d'un angle sensiblement égal à 360°/N au cours d'un déplacement linéaire égal à la distance linéaire entre deux objets successifs.

D'autres aspects, buts et avantages de la présente invention apparaîtront mieux à la lecture de la description détaillée suivante de formes de réalisation préférées de celle-ci, donnée à titre d'exemple et faire en référence aux dessins annexés, sur lesquels :
la figure 1 est une vue schématique en élévation de face d'une partie d'une machine de tri de fruits et d'un dispositif d'analyse visuelle selon l'invention,
la figure 2 est une vue schématique d'une caméra à capteurs matriciels selon l'invention,
la figure 3 illustre les bandes passantes d'un capteur CCD couleurs du commerce,
la figure 4 illustre la réponse d'un premier filtre utilisé dans la caméra de l'invention,
la figure 5 illustre la réponse d'un second filtre utilisé dans la caméra selon l'invention,
la figure 6 illustre plus en détail les bandes chromatiques traitées avec la caméra selon l'invention,
la figure 7 illustre schématiquement une variante d'un dispositif d'analyse visuelle selon l'invention, avec vision stéréoscopique,
la figure 8 illustre schématiquement un autre dispositif d'analyse visuelle selon l'invention avec vision stéréoscopique, et
la figure 9 illustre une disposition avantageuse de caméras selon l'invention.

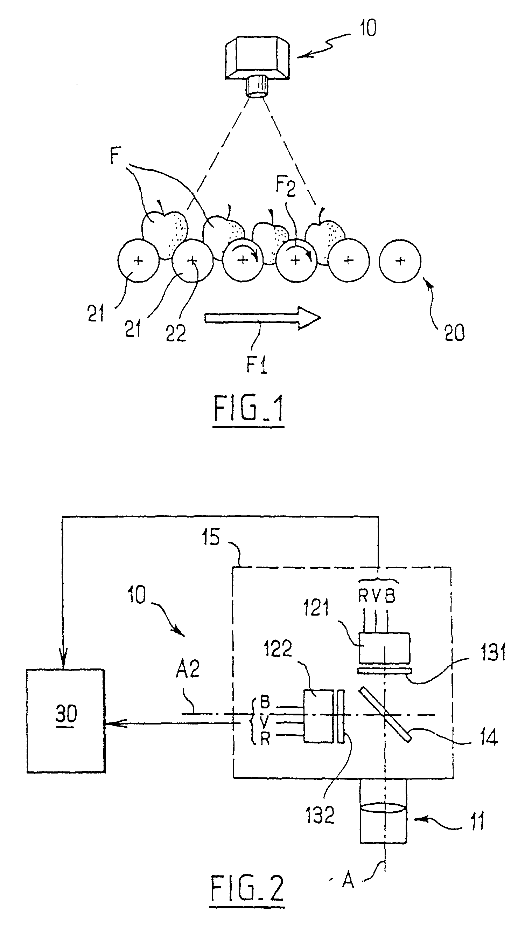

En référence tout d'abord à la figure 1, on a représenté schématiquement une caméra d'analyse visuelle 10 selon l'invention, disposée au-dessus d'un mécanisme 20 de convoyage de fruits à trier et/ou à calibrer et reliée à un circuit 30 de traitement d'images.

Ce dispositif de convoyage comprend classiquement un ensemble de rouleaux 21 de type «Diabolo» montés sur des axes 22. Des fruits F, singularisés en amont, sont transportés chacun dans le renfoncement formé entre deux rouleaux adjacents.

L'ensemble est entraîné en translation selon la flèche F1, tandis que chaque rouleau 22 est entraîné en rotation selon la flèche F2, dans un sens et à une vitesse angulaire telles que, en combinaison avec le mouvement de translation selon la flèche F1, la vitesse résultante de la surface du fruit en sa partie supérieure soit essentiellement nulle.

Ce système de convoyage est par exemple celui qui équipe des machines « Compac » ou « Compac SLS » disponibles sur le marché, fabriquées par la société Horticultural Automation Limited, PO Box 13516, Auckland, Nouvelle-Zélande. Il ne sera donc pas décrit plus avant.

L'ensemble est complété par un système d'éclairage approprié en lumière blanche (non représenté).

Alors que la caméra 10 est traditionnellement un capteur CCD couleurs du commerce, de définition appropriée, la présente invention propose une nouvelle caméra que l'on va maintenant décrire en référence à la figure 2.

Cette caméra comporte un boîtier 15 et une optique 11. A l'intérieur du boîtier est disposé un miroir plan semi-transparent orienté par exemple à 45° par rapport à l'axe A de l'optique 11.

Un premier capteur CCD couleurs RVB (référence 121), par exemple du type disponible dans le commerce, est disposé avec son plan sensible perpendiculaire à l'axe A1, en arrière du miroir 14. En avant du plan sensible du capteur 121 est disposé un filtre chromatique 131 que l'on décrira en détail plus loin.

La partie du rayonnement arrivant sur le miroir 14 et qui est réfléchie par celui-ci sous un angle moyen de 90° par rapport à l'axe A1 se dirige, selon l'axe A2, vers un second capteur CCD 122, de préférence identique au premier, un second filtre chromatique 132, différent du premier, étant interposé devant son plan sensible.

Cette configuration va permettre à l'ensemble des deux capteurs de délivrer jusqu'à six signaux d'images (trois par capteur) représentatifs chacun d'une composante chromatique particulière de l'image prise par la caméra, comme on va le voir en détail plus loin.

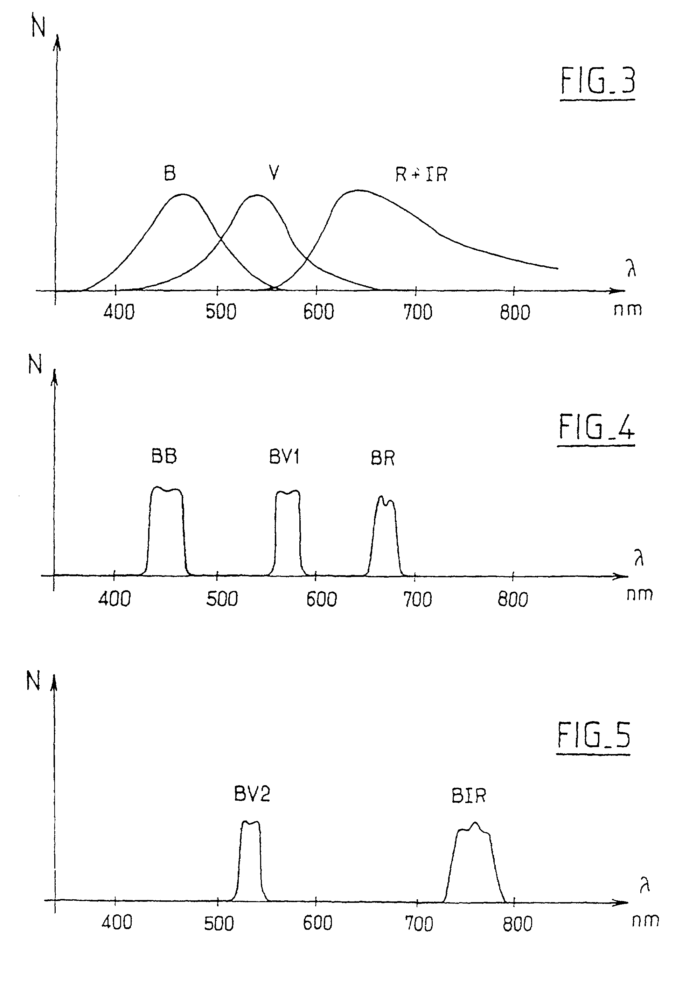

La figure 3 illustre la réponse chromatique d'un capteur CCD couleurs classique du commerce, le signal de bleu (sortie B) correspondant à la quantité de lumière reçue dans une première bande large s'étendant typiquement de l'ultraviolet proche jusqu'à une longueur d'onde de l'ordre de 510 nm, le signal de vert (sortie V) correspondant à la quantité de lumière reçue dans une deuxième bande large s'étendant typiquement entre environ 510 nm et environ 625 nm, tandis que la signal de rouge (sortie R) correspond à la quantité de lumière reçue dans une troisième bande large s'étendant typiquement entre environ 625 nm et plus de 800 nm, c'est-à-dire couvrant le rouge ainsi que l'infrarouge proche (bande désignée par « R+IR ». On observera ici que c'est la largeur de ces bandes, combinées à une faible séparation (pentes de transition douces) entre celles-ci, qui font qu'un tel capteur CCD du commerce, en tant que tel, donne des résultats imparfaits en matière de sélectivité colorimétrique.

La figure 4 illustre la réponse du filtre 131 interposé devant le capteur 121.

On observe qu'il est caractérisé par trois bandes étroites qui s'étendent respectivement à l'intérieur des trois bandes larges B, V et R+IR de la figure 3, et qui présentent des flancs raides.

Ainsi on trouve une bande étroite de bleu BB, qui laisse passer la lumière entre des longueurs d'onde d'environ 435 et 470 nm, une bande étroite de vert BV1, qui laisse passer la lumière entre des longueurs d'onde d'environ 560 et 585 nm, et une bande étroite de rouge BR, qui laisse passer la lumière entre des longueurs d'ondes d'environ 660 à 680 nm.

Chacune de ces bandes étroites étant contenue dans une bande large respective propre au capteur 121, sans déborder vers une bande voisine, les sorties RVB du capteur 121 délivrent donc trois signaux d'image correspondant à ces trois bandes étroites, pour un traitement ultérieur à l'aide du circuit de traitement 30.

La figure 5 illustre quant à elle la réponse du filtre 132 interposé devant le capteur 122.

Il est caractérisé par deux bandes étroites qui sont à chaque fois différentes des bandes du filtre 131 et qui s'étendent respectivement à l'intérieur de deux des trois bandes larges du capteur 122, à savoir les bandes V et I+IR, et qui possèdent des flancs raides.

Ainsi on trouve une bande étroite de vert BV2, qui laisse passer la lumière entre des longueurs d'onde d'environ 525 et 545 nm, et une bande étroite d'infrarouge BIR, qui laisse passer le rayonnement infrarouge entre des longueurs d'ondes d'environ 740 à 780 nm.

Chacune de ces bandes étroites étant contenue dans une bande large respective propre au capteur 121, sans déborder vers une bande voisine, les sorties V et R du capteur 122 délivrent donc deux signaux d'image supplémentaires correspondant à ces deux bandes étroites, pour un traitement ultérieur à l'aide du circuit de traitement 30.

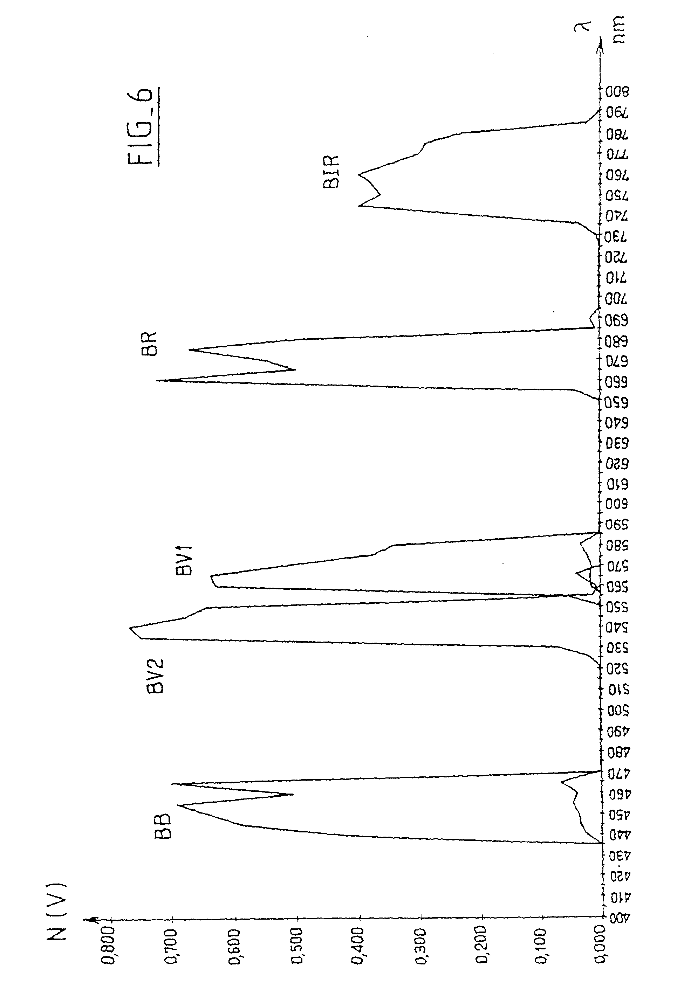

La figure 6 illustre en détail la répartition spectrale des cinq bandes BB, BV1, BV2, BR et BIR traitées par le système de caméra 10 de la présente invention.

On observera ici que le deuxième capteur CCD 122 possède une sortie (sa sortie Bleu) qui n'est pas utilisée.

On peut bien entendu ajouter au filtre 132 une troisième bande passante située dans la bande large de bleu du capteur 132. Toutefois, l'intérêt pratique d'une telle information chromatique additionnelle s'avère limité dans la pratique, dans la mesure où il impose un traitement supplémentaire par le circuit 30 de traitement d'images sans apport significatif en matière de tri sélectif par couleurs ou de détection de défauts.

On observera par ailleurs que, selon une caractéristique intéressante de l'invention, la caméra travaille avec deux bandes étroites de positions particulières dans les verts et deux bandes étroites de positions particulières dans le rouge et l'infrarouge, ce qui permet d'obtenir une excellente sélectivité sur les longueurs d'onde spécifique de deux composants particulièrement influents dans la teinte des fruits, à savoir la chlorophylle et le carotène.

En outre, une telle combinaison de bandes étroites permet d'effectuer plus facilement des distinctions entre des taches sombres existant sur des fruits sains et des taches sombres assez proches (souvent dans le domaine du marron) révélatrices d'un fruit dont la chair a été détériorée par des chocs.

Ainsi il est possible de distinguer grâce à la présente invention des nuances de teintes qui n'étaient pas détectables avec les caméras de l'art antérieur, et qui peuvent s'avérer importantes non seulement du strict point de vue de la teinte pour le consommateur (en se rapprochant de la sensibilité de l'oeil humain pour certaines caractéristiques de couleurs), mais également du point de vue de la qualité et de la teneur en certains éléments.

De façon avantageuse, l'optique 11 de la caméra 10 et sa position au-dessus du chemin de fruits sont telles que chaque image prise par la caméra englobe une pluralité de fruits successifs.

Le circuit de traitement 30 peut être du type classique en soi. Il est capable, sur la base d'une programmation du type réseau de neurones, d'identifier les contours de chaque fruit dans l'image, et d'effectuer l'analyse chromatique dans chacune des bandes de longueurs d'onde précitées sur une pluralité d'images du fruit. Plus précisément, on l'a vu précédemment que la partie de sommet de chaque fruit, du fait de la translation combinée à la rotation, était sensiblement immobile dans le champ de la caméra. La caméra va ainsi pouvoir, pendant le passage d'un fruit effectuer les traitements sur N images du fruit, et plus précisément sur des zones de chacune de ces images correspondant à la partie située couramment au sommet du fruit, c'est-à-dire essentiellement dans une région centrale de la zone délimitée par les contours du fruit.

A ce sujet, il est important de régler le champ couvert par la caméra 10 de telle sorte que le fruit puisse effectuer au moins une révolution complète sur lui-même dans ce champ, ce qui permet au circuit 30 d'analyser toute la surface du fruit.

Par exemple, si l'on fait en sorte qu'un même fruit, au cours d'une révolution complète, soit présent en des emplacements différents, localisés par programme, sur six images successives prises par la caméra, et si le circuit de traitement est conçu pour analyser la zone de sommet d'un fruit couvrant au moins un angle de 60° par rapport au centre du fruit, alors il est possible d'analyser sensiblement toute la surface périphérique du fruit.

Le circuit 30 est en outre relié au bloc de commande de l'installation de manière à provoquer l'aiguillage des fruits en fonction de comparaisons intelligentes avec des seuils donnés dans chaque bande spectrale, selon des processus analogues à ceux utilisés avec un capteur CCD en couleurs du commerce, équipant actuellement de telles machines.

Les documents US-A-5 030 001, EP-A-554 954 et EP-A-105 452 décrivent des dispositifs d'analyse de surfaces répondant à ce principe d'une rotation complète de l'objet à analyser dans le champ de la caméra, et l'on s'y référera pour davantage de détails.

On va maintenant décrire un autre aspect d'une machine de traitement de fruits, destiné à un dispositif d'analyse colorimétrique d'effectuer une analyse efficace et fiable pour différents diamètres de fruits.

On comprend que, dans le dispositif de convoyage du type représenté sur la figure 1 et équipant notamment les machines « Compac » précitées, la vitesse angulaire de rotation d'un fruit sur lui-même est d'autant plus élevée que le diamètre du fruit est petit.
Ainsi, pour une cadence donnée de prise d'images par la caméra, et pour des vitesses données de translation et de rotation au niveau du convoyeur, la présence d'un fruit de diamètre plus petit, et donc tournant plus vite sur lui-même, va faire en sorte que les différentes sections analysées de la surface du fruit lors de sa rotation ne vont pas pouvoir s'enchaîner correctement, laissant entre deux sections effectivement analysées des zones non analysées, susceptibles de présenter des défauts qui passeront donc inaperçus.

Selon un aspect de cette invention, on utilise le circuit 30 de traitement d'image pour déterminer le diamètre de chaque fruit passant devant la caméra, ou le diamètre d'un fruit parmi une série de fruits successifs, puis un calculateur effectue une moyenne des diamètres des X derniers fruits soumis à la mesure, cette valeur de diamètre moyen étant ensuite utilisée pour régler en conséquence la vitesse de rotation des rouleaux 21, qui va elle-même déterminer la vitesse de rotation des fruits sur eux-mêmes. Plus précisément, si N est le nombre de fruits situés simultanément dans le champ de la caméra, la vitesse linéaire de déplacement est choisie de telle sorte que chaque fruit tourne sur lui-même d'un angle sensiblement égal à 360°/N au cours d'un déplacement linéaire égal à la distance linéaire entre deux fruits successifs.

On s'assure de la sorte que, lorsque la machine est à un instant donné alimentée avec des fruits d'un calibre plus petit, le traitement colorimétrique effectué reste efficace.

On observera ici que l'asservissement de la vitesse de rotation des rouleaux 21 sur le diamètre moyen mesuré sur un ensemble de fruits permet d'une part d'éviter les à-coups répétés dans le système d'entraînement motorisé, et d'autre part d'éviter que, dans un lot de fruits donné passant devant la caméra, le fait de privilégier un diamètre d'un fruit particulier (notamment le plus gros ou le plus petit) affecte la qualité de l'analyse des autres fruits.

Le dispositif d'asservissement décrit ci-dessus permet également, en ralentissant la vitesse de rotation des fruits risquant de tourner trop vite, de rester dans tous les cas compatible avec la cadence de prises d'images par la caméra 10.

On observera ici que le dispositif d'asservissement décrit ci-dessus peut être utilisé indifféremment avec un dispositif à bandes chromatiques étroites selon l'invention, tel qu'il a été décrit plus haut, ou avec tout autre dispositif de prise d'images connu.

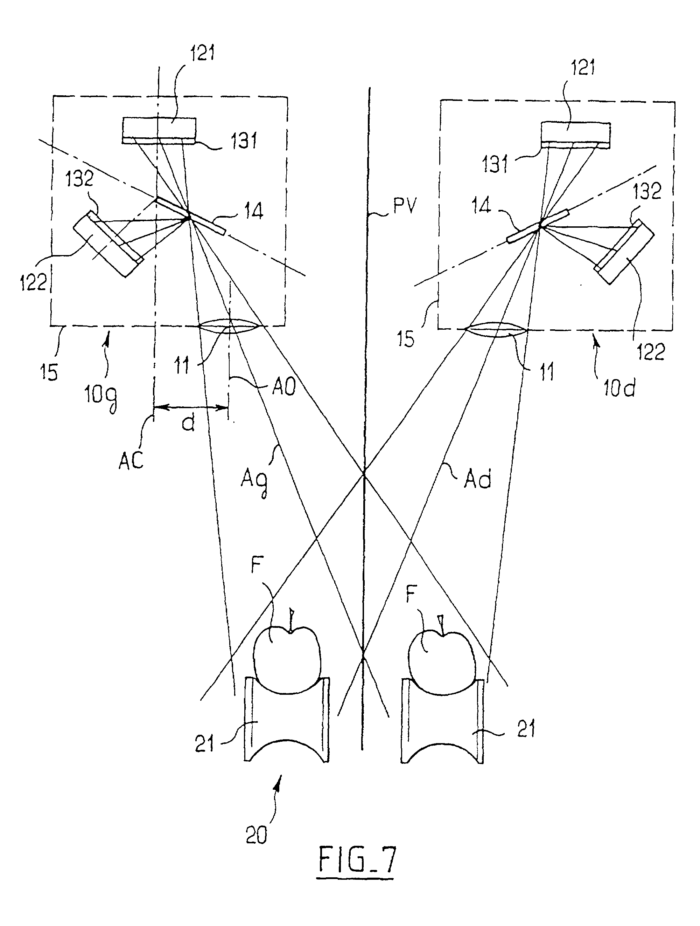

On va maintenant décrire en référence à la figure 7 un dispositif d'analyse basé sur une vision stéréoscopique des fruits à analyser.

En préambule, on comprend qu'avec un système de caméra unique, celle-ci ne va pouvoir observer correctement que les zones du fruit qui sont sensiblement éloignées de l'axe essentiellement horizontal de rotation du fruit sur lui-même. Plus précisément, deux calottes latérales situées au voisinage de cet axe, et dont la taille dépend principalement de la distance entre le fruit et l'optique de la caméra, ne pourront pas être observées. Et si ces calottes comportent des défauts tels que des cavités, ceux-ci ne pourront pas être détectés.

La figure 7 illustre une solution destinée à pallier cette limitation.

Il est ainsi prévu deux caméras 10g et 10d, construites selon le principe décrit en référence à la figure 2, situées au-dessus du chemin de convoyage (en l'espèce un chemin double) et respectivement à gauche et à droite de celui-ci. De la sorte, les deux caméras ont des axes de visée respectifs Ag et Ad sensiblement inclinés par rapport à un plan vertical axial PV, et chaque caméra peut observer la calotte latérale tournée du côté correspondant.

Le circuit de traitement d'image 30, qui possède alors deux groupes de cinq entrées pour les cinq signaux de composante de couleur fournis par chaque caméra, possède des moyens de traitement appropriés pour recombiner les images prises simultanément par chacune des deux caméras, de préférence en utilisant une technique classique de superposition de points caractéristiques.

On comprend toutefois que, plus les calottes latérales des fruits doivent être visibles, c'est-à-dire plus les axes Ag et Ad doivent être inclinés, plus les erreurs de parallaxe rendent une telle superposition difficile.

Pour pallier cette difficulté, chaque caméra est agencée de manière à posséder une fonction de compensation de parallaxe, basée sur un décalage latéral de l'optique 11 de la caméra respective par rapport à l'axe de visée des deux capteurs CCD, rendu commun au niveau du miroir 14.

Ainsi on observe que, dans la caméra gauche 10g, l'objectif 11 possède un axe d'optique AO qui n'est pas confondu avec l'axe Ag mais qui est vertical, et que l'axe optique commun AC des deux capteurs 121 et 122 est également vertical ; on observe en outre que l'axe AO de l'objectif 11 est décalé latéralement d'une distance d par rapport à l'axe commun AC des capteurs 121, 122.

Cette distance d est choisie essentiellement en fonction de l'angle de l'axe de visée Ag recherché par rapport à la verticale et de la distance du trajet optique entre l'objectif 11 et le plan sensible de chaque capteur 121, 122.

La disposition décrite ci-dessus agit pour compenser les défauts de parallaxe, et la disposition symétrique est adoptée dans l'autre caméra 10d.

De la sorte, les images prises par les deux caméras peuvent être superposées par le circuit de traitement beaucoup plus précisément, du fait que les points singuliers permettant d'effectuer cette superposition vont avoir des formes et des dimensions beaucoup plus semblables.

De façon préférée, le circuit de traitement 30 est étalonné à intervalles réguliers à l'aide d'objets portant des repères visuels particuliers permettant de calibrer la superposition d'images et d'équilibrer la réponse colorimétrique.

On observera ici que la structure de la caméra telle que représentée sur la figure 2 se prête particulièrement bien à l'obtention de la correction de parallaxe précitée, dans la mesure où il suffit d'adapter les positions et les orientations respectives des différents composants, principalement les deux capteurs 121, 122, les deux filtres 131, 132 le miroir 14 et l'objectif 11, qui sont initialement sous forme d'élément séparés.

On observera par ailleurs que, sachant que le miroir semi-transparent 14 a des coefficients de transmission et de réflexion qui peuvent varier en fonction de l'angle d'incidence du rayonnement, l'agencement des deux capteurs 121, 122 et de leurs filtres 131, 132 et du miroir est avantageusement différent de celui de la figure 2.

Plus précisément, le miroir 14 s'étend dans ce cas dans un plan incliné à 45° non pas par rapport à la verticale mais par rapport à l'axe de visée Ag ou Ad (on notera ici que cet angle est de 45° dans le cas d'une absence de décalage des optiques des caméras, mais dans le cas où un tel décalage existe, une valeur différente, calculée en fonction de la valeur du décalage, sera obtenue). Le premier capteur 121 est quant à lui disposé de telle sorte que son plan sensible soit horizontal, tandis que le second capteur 122 est disposé de façon symétrique du premier capteur par rapport au plan du miroir 14, et l'on observe clairement que, pour les raisons ci-dessus, les plans sensibles des deux capteurs CCD ne sont plus perpendiculaires l'un à l'autre.

On observera ici que des capteurs CCD en couleurs du commerce possèdent un objectif incorporé, et le décalage latéral précité entre l'axe de l'objectif et l'axe du capteur se trouve difficile à réaliser.

Toutefois, cette caractéristique d'une vision stéréoscopique reste pleinement applicable à une paire de capteurs CCD en couleurs de type classique dans lesquels l'objectif et le capteur lui-même sont prévus sous forme d'éléments séparés.

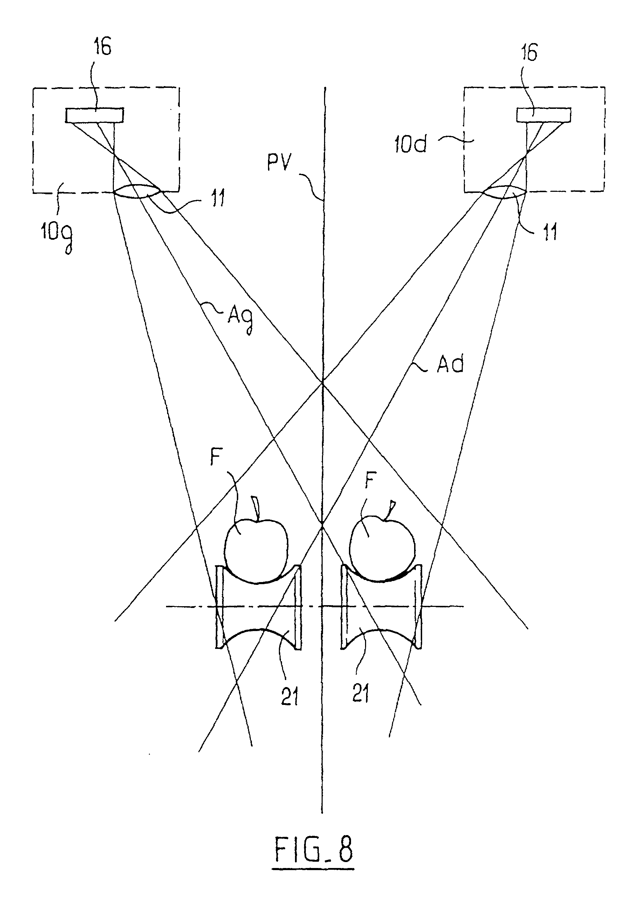

La figure 8 illustre cette configuration, et se distingue de la figure 7 essentiellement par le fait que chaque ensemble de deux capteurs 121, 122, de deux filtres 131, 132 et du miroir 14 est remplacé par un capteur CCD unique 16, par exemple du type disponible dans le commerce.

On conserve dans ce cas l'avantage d'une compensation de parallaxe.

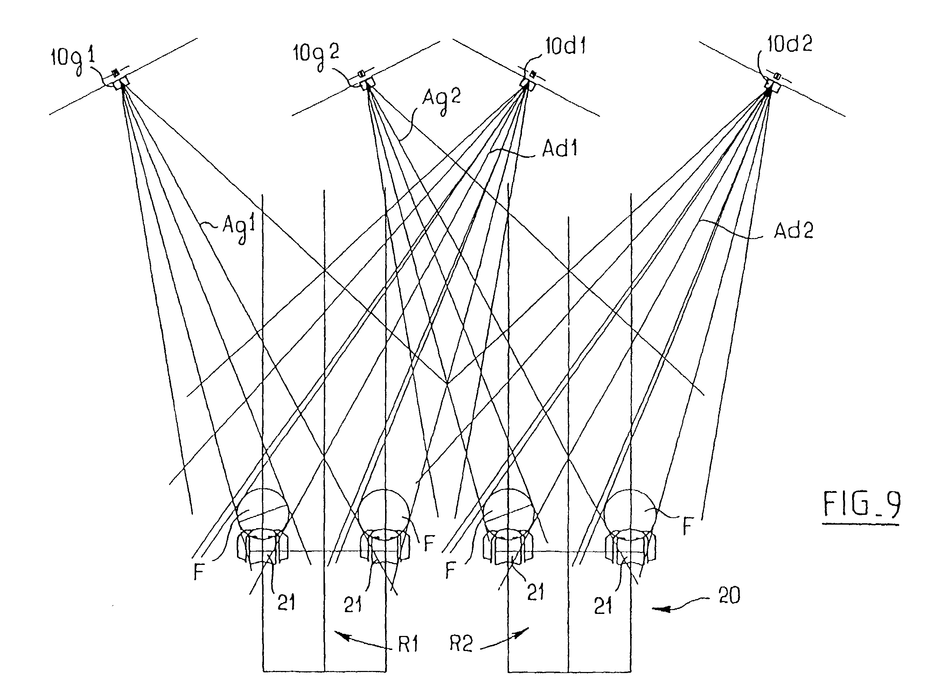

La figure 9 illustre une disposition avantageuse de caméras dans le cas où la machine de convoyage et de tri possède deux rangées de convoyage possédant chacune deux chemins de fruits.

On dispose alors les paires de caméras, respectivement 10g1 et 10d1 pour la rangée R1, et 10g2 et 10f2 pour la rangée R2, de façon entrelacée, les axes de visée de ces caméras étant respectivement désignés par Ag1, Ad1, Ag2 et Ad2.

Avantageusement, dans le cas d'une observation stéréoscopique, la distance horizontale entre les caméras est voisine de la distance verticale entre les caméras et les fruits, ces distances étant par exemple de l'ordre de 1 m.

On observera ici qu'une vision stéréoscopique des fruits à trier permet d'une part d'étendre l'analyse colorimétrique des fruits aux calottes latérales qui sont invisibles ou mal visibles par une seule caméra, et d'autre part et surtout d'améliorer la détection de défauts géométriques sur les fruits, tels que des cavités, dans la mesure où la superposition des deux images va dans ce cas donner lieu à des points singuliers facilement identifiables liés au fait qu'une anomalie géométrique sur le fruit va donner lieu à des géométries très différentiées dans les images correspondantes.

Bien entendu, la présente invention n'est nullement limitée aux formes de réalisation décrites ci-dessus et représentées sur les dessins, mais l'homme du métier saura y apporter des variantes ou modifications.

En particulier, bien que la description ci-dessus ait été faite dans le cadre du tri sélectif des fruits, il est bien entendu que l'invention s'applique également au tri sélectif de tous autres objets que l'on cherche à classer selon le même type de propriétés, et notamment les légumes ou autres produits alimentaires de forme généralement sphérique (ou ovoïde) ou encore cylindrique.

## Revendications

1. Dispositif pour l'analyse notamment colorimétrique d'un objet (F) tel qu'un fruit ou un légume, comprenant une caméra (10 ; 10g, 10d de prise d'images et des moyens de traitement (30) pour analyser les images délivrées par la caméra, la caméra comprenant des moyens de capteur matriciel (121) délivrant simultanément au moins deux signaux d'une même image correspondant respectivement à au moins deux bandes étroites non superposées (BB, BV1, BV2, BR) du spectre visible, **caractérisé en ce que** les moyens de capteur matriciel comprennent un capteur à couplage de charges (121, 122) apte à délivrer en tant que tel trois signaux d'images (R, V, B) correspondant à trois bandes larges couvrant ensemble au moins le spectre visible, et un filtre passe-bande (131, 132) à bandes étroites interposé entre l'objet (F) et le capteur.

2. Dispositif selon la revendication 1, **caractérisé en ce qu'**un moyen de capteur matriciel (122) délivre en outre un signal d'image correspondant à une bande (BIR) située dans l'infrarouge.

3. Dispositif selon l'une des revendications 1 et 2, **caractérisé en ce que** les moyens de capteur matriciel (121) délivrent au moins trois signaux d'images correspondant à au moins trois bandes étroites (BB, BV1, BR) non superposées du spectre visible.

4. Dispositif selon la revendication 3, **caractérisé en ce que** les moyens de capteur matriciel (121, 122) couvrent au moins quatre bandes étroites non superposées (BB, BV1, BV2, BR) du spectre visible.

5. Dispositif selon les revendications 2 et 4 prises en combinaison, **caractérisé en ce qu'**il comprend un premier capteur à couplage de charges (121) apte à délivrer des signaux d'image correspondant à trois bandes larges (R, couvrant ensemble au moins le spectre visible, un premier filtre passe-bande à bandes étroites interposé entre l'objet et le capteur, un second capteur à couplage de charges apte à délivrer des signaux d'image correspondant à au moins deux bandes larges couvrant ensemble au moins une partie du spectre visible et une partie du spectre infrarouge, un second filtre passe-bande à bandes étroites interposé entre l'objet et le capteur, et un miroir semi-réfléchissant apte à répartir le rayonnement issu de l'objet entre les premier et second capteurs.

6. Dispositif selon la revendication 5, **caractérisé en ce que** les deux capteurs (121, 122) sont identiques et sont aptes à délivrer des signaux d'image correspondant à trois bandes larges (B, V, R+IR) couvrant respectivement pour la première le bleu, pour la seconde le vert et pour la troisième le rouge ainsi qu'une partie de l'infrarouge.

7. Dispositif selon la revendication 6, **caractérisé en ce que** le premier filtre (131) possède des bandes passantes centrées respectivement autour d'environ 435 à 470 nm, d'environ 530 à 585 nm et d'environ 655 à 685 nm.

8. Dispositif selon l'une des revendications 6 et 7, **caractérisé en ce que** le second filtre (132) possède deux bandes passantes centrées respectivement autour d'environ 530 à 585 nm et d'environ 735 à 785 nm.

9. Dispositif selon les revendications 7 et 8 prises en combinaison, **caractérisé en ce que** la seconde bande du premier filtre (131) et la première bande du second filtre (132) sont centrées à environ 530 à 555 nm et à environ 555 à 585 nm, ou inversement.

10. Dispositif selon l'une des revendications 1 à 9, **caractérisé en ce qu'**il comprend deux capteurs matriciels (10g, 10d et leurs optiques respectives, agencés de manière à réaliser une observation stéréoscopique des objets.

11. Dispositif selon la revendication 10, **caractérisé en ce que** les deux caméras présentent des axes de visée (Ag, Ad) sensiblement inclinés l'un par rapport à l'autre et des moyens de correction de parallaxe.

12. Dispositif selon la revendication 11 prise en combinaison avec l'une des revendications 6 à 9, **caractérisé en ce que** les plans sensibles des capteurs (121) de chaque caméra qui reçoivent la lumière ayant traversé le miroir respectif (14) sont coplanaires, et de préférence horizontaux.

13. Dispositif selon la revendication 12, **caractérisé en ce que** les optiques (11) des deux caméras ont des axes (AO) parallèles l'un à l'autre, et de préférence verticaux, et sont latéralement décalés (d) par rapport aux axes centraux (AC) desdits plans sensibles.

14. Dispositif selon l'une des revendications 12 et 13, **caractérisé en ce que** les plans sensibles des capteurs (121, 122) de chaque caméra qui reçoivent la lumière réfléchie et transmise, respectivement, par le miroir associé (14), sont disposés symétriquement, par rapport audit miroir.

15. Dispositif selon l'une des revendications 12 à 14, **caractérisé en ce que** les angles des miroirs respectifs des deux caméras, par rapport aux axes de visée (Ag, Ad) desdites deux caméras, sont calculé en fonction du décalage latéral des optiques des caméras par rapport aux axes centraux des plans sensibles.

16. Installation de tri colorimétrique d'objets tels que des fruits ou des légumes, **caractérisée en ce qu'**elle comprend un dispositif selon l'une des revendications 1 à 15 et un dispositif (20) pour convoyer linéairement des objets singularisés (F) disposés en file tout en leur imprimant un mouvement de rotation, **caractérisée en ce qu'**elle comprend des moyens pour ajuster la vitesse de rotation des objets en fonction d'une taille moyenne des objets défilant dans le champ de la caméra (10) du dispositif.

17. Installation selon la revendication 16, **caractérisée en ce que** le dispositif de convoyage (20) comprend des moyens (21) pour faire tourner les objets sur eux mêmes à mesure qu'ils se déplacent linéairement, **en ce que** le champ d'observation de la caméra est tel qu'un nombre N d'objets soient visibles simultanément par la caméra (10), et **en ce que** ladite vitesse linéaire de déplacement est choisie de telle sorte que chaque objet tourne sur lui-même d'un angle sensiblement égal à 360°/N au cours d'un déplacement linéaire égal à la distance linéaire entre deux objets (F) successifs.

## Patentansprüche

1. Vorrichtung zur Analyse und insbesondere Farbanalyse eines Objekts (F), wie eine Frucht oder ein Gemüse, welche eine Kamera (10; 10g, 10d) zur Aufnahme von Bildern und Verarbeitungsmittel (30) zum Analysieren der von der Kamera gelieferten Bilder umfaßt, wobei die Kamera Matrixbildwandler (121) umfaßt, die gleichzeitig mindestens zwei Signale eines gleichen Bildes liefern, die zu jeweils mindestens zwei sich nicht überlagernden schmalen Bändern (BB, BV1, BV2, BR) des sichtbaren Spektrums gehören, **dadurch gekennzeichnet, daß** die Matrixbildwandler einen CCD-Bildwandler (121, 122), der geeignet ist, drei Signale von Bildern (R, V, B) zu liefern, die zu drei breiten Bändern gehören, die zusammen mindestens das sichtbare Spektrum abdecken, und einen Bandpaßfilter (131, 132) mit schmalen Bändern umfassen, der zwischen dem Objekt (F) und dem Bildwandler angeordnet ist.

2. Vorrichtung nach Anspruch 1, **dadurch gekennzeichnet, daß** ein Matrixbildwandler (122) unter anderem ein Bildsignal liefert, das zu einem im Infraroten liegenden Band (BIR) gehört.

3. Vorrichtung nach einem der Ansprüche 1 und 2, **dadurch gekennzeichnet, daß** die Matrixbildwandler (121) mindestens drei Signale der Bilder liefern, die zu mindestens drei sich nicht überlagernden schmalen Bändern (BB, BV1, BR) des sichtbaren Spektrums gehören.

4. Vorrichtung nach Anspruch 3, **dadurch gekennzeichnet, daß** die Matrixbildwandler (121, 122) mindestens vier sich nicht überlagernde schmale Bänder (BB, BV1, BV2, BR) des sichtbaren Spektrums abdecken.

5. Vorrichtung nach den Ansprüchen 2 und 4 in Kombination, **dadurch gekennzeichnet, daß** sie umfaßt: einen ersten CCD-Bildwandler (121) zum Liefern der Bildsignale, die zu drei breiten Bändern (R, V, B) gehören, die zusammen wenigstens das sichtbare Spektrum abdecken, einen ersten Bandpaßfilter mit schmalen Bändern, der zwischen dem Objekt und dem Bildwandler angeordnet ist, einen zweiten CCD-Bildwandler zum Liefern der Bildsignale, die zu wenigstens zwei breiten Bändern gehören, die zusammen wenigstens einen Teil des sichtbaren Spektrums und einen Teil des Infrarotspektrums abdecken, einen zweiten Bandpaßfilter mit schmalen Bändern, der zwischen dem Objekt und dem Bildwandler angeordnet ist, und einen halbdurchlässigen Spiegel, der geeignet ist, die vom Objekt ausgehende Strahlung zwischen dem ersten und dem zweiten Bildwandler aufzuteilen.

6. Vorrichtung nach Anspruch 5, **dadurch gekennzeichnet, daß** die beiden Bildwandler (121, 122) identisch sind und geeignet sind, Bildsignale zu liefern, die zu drei breiten Bändern (B, V, R+IR) gehören, von denen das erste den blauen, das zweite den grünen und das dritte den roten sowie einen Teil des infraroten Bereiche abdecken.

7. Vorrichtung nach Anspruch 6, **dadurch gekennzeichnet, daß** der erste Filter (131) Bandpässe besitzt, die um etwa 435 bis 470 nm, um etwa 530 bis 585 nm bzw. um etwa 655 bis 685 nm zentriert sind.

8. Vorrichtung nach einem der Ansprüche 6 und 7, **dadurch gekennzeichnet, daß** der zweite Filter (132) zwei Bandpässe besitzt, die um etwa 530 bis 585 nm bzw. um etwa 735 bis 785 nm zentriert sind.

9. Vorrichtung nach den Ansprüchen 7 und 8 in Kombination, **dadurch gekennzeichnet, daß** das zweite Band des ersten Filters (131) und das erste Band des zweiten Filters (132) bei etwa 530 bis 555 nm und bei etwa 555 bis 585 nm, oder umgekehrt, zentriert sind.

10. Vorrichtung nach einem der Ansprüche 1 bis 9, **dadurch gekennzeichnet, daß** sie zwei Matrixbildwandler (10g, 10d und ihre jeweiligen Optiken umfaßt, die derart angeordnet sind, daß eine Stereobeobachtung der Objekte ermöglicht wird.

11. Vorrichtung nach Anspruch 10, **dadurch gekennzeichnet, daß** die beiden Kameras Richtachsen (Ag, Ad), die deutlich gegeneinander geneigt sind, und Mittel zur Parallaxenkorrektur aufweisen.

12. Vorrichtung nach Anspruch 11 in Kombination mit einem der Ansprüche 6 bis 9, **dadurch gekennzeichnet, daß** die empfindlichen Flächen der Bildwandler (121) jeder Kamera, die das Licht empfangen, das den jeweiligen Spiegel (14) durchquert hat, koplanar und bevorzugt horizontal sind.

13. Vorrichtung nach Anspruch 12, **dadurch gekennzeichnet, daß** die Optiken (11) der beiden Kameras zueinander parallele und bevorzugt vertikale Achsen (AO) aufweisen und bezüglich der zentralen Achsen (AC) der empfindlichen Flächen seitlich verschoben (d) sind.

14. Vorrichtung nach einem der Ansprüche 12 und 13, **dadurch gekennzeichnet, daß** die empfindlichen Flächen der Bildwandler (121, 122) jeder Kamera, die das von dem entsprechenden Spiegel (14) reflektierte bzw. durchgelassene Licht empfangen, symmetrisch bezüglich des Spiegels angeordnet sind.

15. Vorrichtung nach einem der Ansprüche 12 bis 14, **dadurch gekennzeichnet, daß** die Winkel der jeweiligen Spiegel der beiden Kameras bezüglich der Richtachsen (Ag, Ad) der beiden Kameras in Abhängigkeit von der seitlichen Verschiebung der Optiken der Kameras bezüglich der zentralen Achsen der empfindlichen Flächen berechnet werden.

16. Anlage zur Farbtrennung von Objekten wie Früchten oder Gemüse, **dadurch gekennzeichnet, daß** sie eine Vorrichtung nach einem der Ansprüche 1 bis 15 und eine Vorrichtung (20) zum geradlinigen Transportieren von einzelnen, hintereinander angeordneten Objekten, denen eine Rotationsbewegung verliehen wird, umfaßt, **dadurch gekennzeichnet, daß** sie Mittel zum Justieren der Rotationsgeschwindigkeit der Objekte in Abhängigkeit einer mittleren Größe der im Feld der Kamera (10) der Vorrichtung laufenden Objekte umfaßt.

17. Anlage nach Anspruch 16, **dadurch gekennzeichnet, daß** die Transportvorrichtung (20) Mittel (21) zum Rotieren der Objekte um sich selbst in dem Maße, wie sie sich geradlinig fortbewegen, umfaßt, dadurch, daß das Beobachtungsfeld der Kamera derart ist, daß N Objekte gleichzeitig durch die Kamera (10) sichtbar sind, und dadurch, daß die geradlinige Geschwindigkeit der Fortbewegung derart gewählt ist, daß jedes Objekt im Laufe einer geradlinigen Fortbewegung, die gleich dem geradlinigen Abstand zwischen zwei aufeinanderfolgenden Objekten (F) entspricht, sich um sich selbst um einen Winkel von im wesentlichen gleich 360°/N dreht.

## Claims

1. Device for the analysis, especially the colorimetric analysis, of an object (F) such as a fruit or a vegetable, comprising an imaging camera (10; 10g 10d) and processing means (30) for analysing the images delivered by the camera, the camera comprising matrix sensor means (121) simultaneously delivering at least two signals of the same image corresponding respectively to at least two narrow bands (B_{B}, B_{G1}, B_{G2}, B), which are not superimposed, of the visible spectrum, **characterized in that** the matrix sensor means comprise a charge-coupled sensor capable of delivering as such three image signals (R, G, B) corresponding to three broad bands together covering at least the visible spectrum, and a narrow-band bandpass filter (131, 132) interposed between the object (F) and the sensor.

2. Device according to Claim 1, **characterized in that** a matrix sensor means (122) furthermore delivers an image signal corresponding to a band (B_{IR}) located in the infrared.

3. Device according to either of Claims 1 and 2, **characterized in that** the matrix sensor means (121) deliver at least three image signals corresponding to at least three narrow bands (BB, B_{G1}, BR), which are not superimposed, of the visible spectrum.

4. Device according to Claim 3, **characterized in that** the matrix sensor means (121, 122) cover at least four narrow bands (B_{B}, B_{G1}, B_{G2}, B), which are not superimposed, of the visible spectrum.

5. Device according to Claims 2 and 4 taken in combination, **characterized in that** it comprises a first charge-coupled sensor (121) capable of delivering image signals corresponding to three broad bands (R), together covering at least the visible spectrum, a first narrow-band bandpass filter interposed between the object and the sensor, a second charge-coupled sensor capable of delivering image signals corresponding to at least two broad bands together covering at least part of the visible spectrum and part of the infrared spectrum, a second narrow-band bandpass filter interposed between the object and the sensor, and a semi-reflecting mirror capable of distributing the radiation from the object between the first and the second sensors.

6. Device according to Claim 5, **characterized in that** the two sensors (121, 122) are identical and are capable of delivering image signals corresponding to three broad bands (B, G, R+IR), the first covering the blue, the second covering the green and the third covering the red and part of the infrared.

7. Device according to Claim 6, **characterized in that** the first filter (131) has pass bands centred respectively around about 435 to 470 nm, about 530 to 585 nm and about 655 to 685 nm.

8. Device according to either of Claims 6 and 7, **characterized in that** the second filter (132) has two pass bands centred respectively around about 530 to 585 nm and about 735 to 785 nm.

9. Device according to Claims 7 and 8 taken in combination, **characterized in that** the second band of the first filter (131) and the first band of the second filter (132) are centred at about 530 to 555 nm and at about 555 to 585 nm, or vice-versa.

10. Device according to one of Claims 1 to 9, **characterized in that** it comprises two matrix sensors (10g, 10d) and their respective optics, arranged so as to provide for stereoscopic observation of the objects.

11. Device according to Claim 10, **characterized in that** the two cameras have viewing axes (Ag, Ad) substantially inclined one with respect to the other and means for correcting parallax.

12. Device according to Claim 11 taken in combination with one of Claims 6 to 9, **characterized in that** the sensitive planes of the sensors (121) of each camera, which receive the light having passed through the respective mirror (14), are coplanar and preferably horizontal.

13. Device according to Claim 12, **characterized in that** the optics (11) of the two cameras have axes (AO) which are parallel to each other, and preferably vertical, and which are laterally offset (d) with respect to the central axes (AC) of the said sensitive planes.

14. Device according to either of Claims 12 and 13, **characterized in that** the sensitive planes of the sensors (121, 122) of each camera, which receive the light reflected and transmitted, respectively, by the associated mirror (14), are arranged symmetrically with respect to the said mirror.

15. Device according to one of Claims 12 to 14, **characterized in that** the angles of the respective mirrors of the two cameras, with respect to the viewing axes (AG, AD) of the said two cameras, are calculated as a function of the lateral offset of the optics of the cameras with respect to the central axes of the sensitive planes.

16. Colorimetric sorting plant for objects such as fruits or vegetables, **characterized in that** it comprises a device according to one of Claims 1 to 15 and a device (20) for the linear transportation of singled-out objects (F) arranged in a line while giving them a rotational movement, **characterized in that** it comprises means for adjusting the rate of rotation of the objects as a function of the mean size of the objects passing through the field of the camera (10) of the device.

17. Plant according to Claim 16, **characterized in that** the transportation device (20) comprises means (21) for making the objects rotate about themselves as they move linearly, **in that** the field of observation of the camera is such that a number N of objects be visible simultaneously by the camera (10) and **in that** the said linear speed of movement is chosen such that each object rotates about itself through an angle substantially equal to 360°/N during a linear displacement equal to the linear distance between two successive objects (F) .
